# FASCICULE DE BREVET EUROPEEN

(11) **EP 0 438 010 B1**
(45) Date de publication et mention de la délivrance du brevet: **29.12.1993**
(21) Numéro de dépôt: 90470072.1
(22) Date de dépôt: 12.12.1990
(51) Int. Cl.: B05D 1/02

(54) **Procédé de dénaturation de peintures et produits pour ce procédé**
Verfahren zur Entklebung von Lack und Produkte dafür
Paint detackification method and products therefor

(30) Priorité: 26.12.1989 FR 8917406
(43) Date de publication de la demande: 24.07.1991
(73) Titulaire: AIR INDUSTRIE SYSTEMES, F-92400 Courbevoie (FR)
(72) Inventeur: Patte, Philippe, F-54000 Nancy (FR)
(74) Mandataire: Weinmiller, Jürgen, Dipl.-Ing.

(56) Documents cités:
- EP-A- 0 167 016
- FR-A- 2 607 141
- US-A- 4 130 674

## Description

La présente invention est relative à un procédé de dénaturation des peintures et aux produits utilisés dans ce procédé.

La présente invention est plus particulièrement relative à la dénaturation des peintures captées dans les cabines de peinture comportant un laveur dans lequel l'air chargé en gouttelettes de peinture est mis en contact avec un liquide de lavage auquel on ajoute une substance auxiliaire pulvérulente.

Dans les installations de ce type, la peinture est en général appliquée par pulvérisation sur les objets à peindre que l'on fait circuler à travers lesdites cabines de peinture. Ce mode d'application s'accompagne de pertes importantes de peinture qui se dépose par exemple sur les parois et les planchers des cabines.

Ces dépôts doivent être éliminés en continu si l'on veut éviter des arrêts de fonctionnement des installations qui seraient alors nécessaires pour réaliser le nettoyage desdites cabines. Dans ce but, l'air des cabines chargé des gouttelettes de peintures est aspiré au travers d'un laveur à rideau de liquide, lors de cette opération les gouttelettes sont transférées de l'air dans ce liquide de lavage qui est ensuite conduit dans un bac de collecte où ledit liquide est séparé de la peinture qu'il a captée pour être recyclé dans le dispositif de lavage.

Or, l'industrie automobile utilise désormais de nouveaux types de peinture pour limiter le rejet des solvants organiques dans l'atmosphère. Il s'agit par exemple de peintures à haut extrait sec, de peintures polyesters ou de peintures à deux composants. Ces peintures sont très difficiles à dénaturer par les procédés classiques tels que ceux dans lesquels on utilise des solvants organiques ou des agents mouillants ou émulsionnants.

On connait, par le brevet FR 2 607 141, un procédé et un dispositif de dénaturation de peintures du type décrit ci-avant dans lesquels, dans un laveur d'air, l'air chargé des gouttelettes de peinture est mis en contact avec un liquide de lavage additionné de poudre de polyuréthanne expansé.

Si, un tel procédé permet d'obtenir des résultats satisfaisants, il pose très souvent un problème d'approvisionnement.

En effet, il est primordial, pour des raisons de coût de transport, d'avoir à proximité immédiate d'une usine automobile une source d'approvisionnement suffisante en poudre de polyuréthanne expansé. Or, cette condition n'est pas toujours réalisée ce qui augmente considérablement le coût d'exploitation d'une installation fonctionnant selon le procédé décrit dans FR 2 607 141.

La demanderesse s'est donc posé le problème de proposer un procédé de dénaturation des peintures qui, tout en gardant les avantages de la poudre de polyuréthanne expansé résout les problèmes d'approvisionnement qu'elle pose.

Les caractéristiques et avantages ressortiront à la suite de la description qui va suivre.

Le procédé selon la présente invention est destiné à être mis en oeuvre dans une installation telle que décrite dans FR 2 607 141.

L'installation, non représentée, est donc constituée d'un tunnel de pulvérisation muni d'un laveur d'air pour la captation des gouttelettes de peinture dans lequel l'air chargé de gouttelettes de peinture est mis en contact avec un liquide de lavage constitué d'eau, ou éventuellement d'eau additionnée d'un acide ou d'une base. Le laveur est alimenté en liquide de lavage par des goulottes situées de part et d'autre dudit laveur, des chenaux de récupération du liquide de lavage conduisant celui-ci vers un bac de collecte à partir duquel le liquide de lavage est recyclé vers les goulottes.

Un dispositif d'introduction, de type connu tel que par exemple décrit dans FR 2 607 141, d'une substance additionnelle est prévu, cette substance étant destinée à être mélangée au liquide de lavage au niveau des goulottes d'alimentation du laveur, c'est à dire en amont de ce dernier.

Dans le brevet FR 2 607 141, la substance additionnelle est constituée de poudre de polyuréthanne expansé.

Or, la demanderesse a découvert que le polyuréthanne expansé pouvait être avantageusement remplacé par une mousse phénolique ou une mousse de polyisocyanate.

En effet, pour ces deux produits, il est obtenu une dénaturation des peintures, c'est à dire principalement une perte du pouvoir collant, aussi bonne que celle observée dans le cas de l'utilisation de poudre de polyuréthanne.

De plus, la boue obtenue flotte à 100% et est donc facilement récupérable par simple raclage.

Le fait que ces deux produits donnent un résultat satisfaisant était rien moins qu'évident puisque des essais ont été aussi réalisés en utilisant du polystyrène expansé, qui est un des matériaux polymères les plus répandus et qui est a priori le produit le plus évident pour remplacer le polyuréthanne expansé. Or, ces essais ont montré que, en toutes quantités, le polystyrène expansé n'avait aucun pouvoir dénaturant sur ces peintures, leur pouvoir collant demeurant intact.

Par ailleurs, il est apparu qu'alors que le mode d'obtention de la poudre de polyuréthanne n'avait pas d'influence sur la consommation en poudre du procédé, ceci n'était plus vrai dans le cadre de l'utilisation des mousses phénoliques ou de polyisocyanate.

Plus particulièrement, pour une peinture donnée constituée d'un mélange de vernis, de laques et de peintures métallisées, si la poudre est obtenue par broyage de panneaux, la consommation de poudre exprimée en kg de poudre par kg de peinture, s'établit selon les chiffres suivants en fonction de la composition des panneaux broyés:
- panneau en polyuréthanne 0,12
- panneau en mousse phénolique 0,24
- panneau en mousse de polyisocyanate 0,62

En revanche si ces poudres sont obtenues par sciage ou déchiquetage de panneau les consommations s'établissent comme suit:
- panneau en polyuréthanne 0,12
- panneau en mousse phénolique 0,18
- panneau en mousse de polyisocyanate 0,30

Il apparaît donc nettement que le mode d'obtention de la poudre, si il n'influe pas sur la capacité de la poudre à dénaturer la peinture, influe en revanche largement sur la consommation.

Ceci peut être expliqué par le fait que, en cas de broyage, les mousses phénoliques ou de polyisocyanate, ne donnent pas des poudres mais des flocons très fins qui ne sont pas aisément distribuables de façon homogène dans le liquide de lavage.

Ce phénomène peut être constaté simplement en effectuant une mesure de densité apparente.

En effet, la densité d'une poudre de mousse phénolique broyée est de l'ordre de 20 g/dm3 alors qu'elle est de 50 g/dm3 à 80 g/dm3 si elle résulte d'un sciage.

De même, une poudre de mousse de polyisocyanate obtenue par broyage est d'une densité de l'ordre de 35g/dm3 au lieu de 100 à 120g/dm3 si elle est obtenue par sciage.

L'utilisation de poudres issues de mousses phénoliques ou de polyisocyanate constitue donc une solution alternative satisfaisante en constituant une source supplémentaire d'approvisionnement.

Par ailleurs l'utilisation de poudres issues de ces mousses et obtenues par sciage ou déchiquetage de panneaux réalisés à partir de ces dites mousses permet d'obtenir un accroissement substantiel du rendement du procédé en diminuant considérablement la consommation en poudre du procédé de dénaturation.

## Revendications

1. Procédé de dénaturation des peintures captées dans les cabines de peintures comportant un laveur dans lequel l'air chargé de gouttelettes de peinture est mis en contact avec un liquide constitué d'eau, ou d'eau additionnée d'un acide ou d'une base, auquel on ajoute une poudre issue d'une mousse caractérisé en ce que la poudre est choisie parmi les poudres phénoliques ou de polyisocyanate.

2. Produit de dénaturation des peintures utilisé dans le procédé selon la revendication 1 caractérisé en ce qu'il est obtenu par sciage ou déchiquetage de panneaux constitués de mousse phénolique ou de mousse de polyisocyanate.

## Claims

1. Method for detackification of paint collected in painting booths containing a washer in which air charged with paint droplets is brought into contact with a liquid which is either plain water or water to which an acid or a base has been added, to which is further added a powder obtained from a foam, characterised in that the powder is a phenolic or polyisocyanate powder.

2. Paint detackification product used in the method according to claim 1 characterised in that it is obtained by slicing or shredding phenolic or polyisocyanate foam panels.

## Patentansprüche

1. Verfahren zur Denaturierung von Lacken, die in den Lackierkabinen mit einer Waschanlage aufgefangen werden, in der die mit Farbtröpfchen angereicherte Luft mit einer Flüssigkeit bestehend aus Wasser oder Wasser mit einem Zusatz von einer Säure oder einer Base in Kontakt gebracht wird, der man ein aus einem Schaum hergestelltes Pulver hinzufügt, dadurch gekennzeichnet, daß das Pulver aus Phenol- oder Polyisocyanatpulvern ausgewählt wird.

2. Produkt zur Denaturierung von Lacken, das im Verfahren nach Anspruch 1 verwendet wird, dadurch gekennzeichnet, daß es durch Zersägen oder Zerstückeln von Platten erhalten wird, die aus Phenolschaum oder Polyisocyanatschaum bestehen.
